# EUROPEAN PATENT APPLICATION

(11) **EP 1 410 984 A1**
(43) Date of publication of application: **21.04.2004**
(21) Application number: 03103748.4
(22) Date of filing: 09.10.2003
(51) Int. Cl.: B62K 19/00, A63B 69/16, A63B 21/015, A63B 22/06, A63B 24/00

(54) **Device and method for determining the customized dimensions of a bicycle frame**

(30) Priority: 14.10.2002 IT PV20020009
(71) Applicant: Buzzi, Emilio Luigi, Bereguardo (PV) (IT)
(72) Inventor: Buzzi, Emilio Luigi, Bereguardo (PV) (IT)
(74) Representative: Karaghiosoff, Giorgio Alessandro, Dr.

(57) **Abstract**

The invention relates to a device for determining the exact dimensions and exact on-seat position of a custom-built bycicle frame, or the exact on-seat position of an existing bycicle. The device consists of a traditional frame (2), which is formed by telescopic tubular members (102), joined together by hinges (202) and adjusted by using linear actuators (14) or equivalent means and which is equipped with appropriate instruments. Particularly, the seat (3) and handlebar (5) are mounted on slides (103) that may be displaced horizontally within the plane that contains the frame (2) and perpendicular to the crank axle.

The inventive method is based on comparisons and possible changes aimed at balancing the horizontal forces discharged on the seat and the handlebar by a cyclist as he pedals in effort conditions.

## Description

The invention relates to device for determining the customized dimensions and seat and handlebar positions of a bicycle frame or for optimizing such position on an existing bicycle, which comprises: a bicycle frame having articulated and/or extendable members for association to a seat, a handlebar and a crank set.

The invention also relates to a method for determining the customized dimensions and seat and handlebar positions of a bicycle frame or for optimizing such position on an existing bicycle, which comprises: a bicycle frame having articulated and/or extendable members for association to a seat, a handlebar and a crank set, and the implementation of such method.

Devices are known which have several degrees of seat and handlebar adjustment, namely by displacement in the vertical direction of the plane that contains the frame and perpendicular to the crank axle and, still within such plane, in the horizontal direction. Also, prior art devices are adjustable in the members that form a frame, but said devices always have shapes different from bicycle frames, hence the dimensions and/or angles as measured on the devices must be converted in bicycle frame-specific dimensions and angles, whereas the seat and handlebar have no degree of free motion relative to the frame.

Regarding the determination of frame dimensions and the setting of seat and/or handlebar positions, prior art is based on the use of multipliers, applied by simple calculations to the user's anthropometric measures and on the knowledge of individual manufacturers and dealers.

Frame dimensions (height, length, inclinations of tubular members), which are currently determined by multiplying the anthropometric measures of the cyclist by coefficients, differ from one manufacturer to the other, and depending on the different coefficients used by them.

The inclination of the seat support tube of the frame, or the seat position relative to the crank axle or crank set, mainly depends on the knowledge of the frame manufacturer (who sets the inclination of the tubular members at predetermined angles).

Fine adjustment of the seat position relative to the crank axle (within a tolerance range of 0.03m), its distance from the handlebar and the height of the handlebar relative to the seat mainly depend on the knowledge of the dealer or the cyclist.

Namely, regarding the determination of the seat height relative to the crank axle, there exists a technique wherein, instead of multiplying the cyclist limb measures by coefficients, adhesives are stuck to the cyclist body in a few basic points of reference.

Then, as the athlete pedals, optical detection systems are used to mark the positions and angles of limbs, which may be varied by adjusting the seat and handlebar positions until generally sports medicine recommended values are reached.

The problem that this invention intends to solve is as follows: different individuals, having the same anthropometric measures would have the same frame dimensions and the same seat position. Nevertheless, different individuals generally have different musculatures, weight distributions, and other body features, which in turn affect the characteristic dimensions of the frame and the seat and handlebar positions. The bicycle features as determined by the coefficient method would not provide optimal results for any individual.

The invention has the object of determining the dimensions and the proper inclination of the tubular members, as well as the exact position of the seat and handlebar of the custom-built bicycle frame, or the exact on-seat position in an existing bicycle, by determining the seat position relative to the pedal which is orthogonal to the direction of the weight force exerted by the cyclist thereon.

The invention achieves the above purposes by providing a device as described hereinbefore, wherein the support frame consists of a bicycle frame, which has all or at least some of its members jointed together in an angularly displaceable and/or in an extendable and retractable manner, and in such a manner as to allow them to be locked in the position and/or angle or dimension that is selected or obtained by tests performed by the device.

A further advantage of this invention is that the seat and the handlebar slide within the plane that contains the frame or is subtended thereby, and perpendicular to the crank axle. Also, the seat and handlebar are free to move. The seat is restrained by a rear abutment, which consists of a dynamometer, for detecting any horizontal component acting thereon, whereas the handlebar is forwardly and backwardly restrained by two abutment members, each consisting of a dynamometer.

In addition to the above, the handlebar is also capable of sliding and has the same degrees of freedom as the seat, but its free motion is allowed on a guide of 0.004 m or is anyway restricted.

Thanks to the above, the optimal shape and size of the frame may be defined with the highest accuracy.

Furthermore, the optimal seat position may be determined in relation to the effort that may be exerted by the cyclist, considering his/her physical resources which also depend on his/her training degree. Also, the above optimal position may be obtained by changing the mounts, even on prefabricated and unchangeable frames.

Regarding the determination of the geometric measures of the frame and the seat and handlebar positions, these are related to the physical state of the athlete, hence they are determined with the help of means for checking and monitoring the physiological parameters of the cyclist with reference to customized values of aerobic physical exercise.

These means are known and used in sports medicine and in exercise equipment, e.g. in heart rate meters and the so-called cycloergometers, which are presently available on the market.

Particularly, for a cyclist whose heart rate in maximum sustainable effort conditions is known (as obtained by the Conconi threshold test, operable by the above mentioned known equipment, or as detected by a cyclist with the help of a heart rate meter), this invention, combined with a heart rate meter, may determine the best frame dimensions, the best seat and handlebar positions, and the optimized pedaling rate.

The frame dimensions and the seat positions obtained by the coefficient methods, or the existing bicycle dimensions are input in the device; a pre-warm up phase is initiated, the seat height and the handlebar distance are adjusted as described above, by marking limbs' positions and angles by using optical systems and references on the cyclist's limbs.

Handlebar height adjustment is based on the subject's ability to get as close as possible to the ideal position (with the torso in the horizontal position), and is performed as follows: as the cyclist pedals with his/her hands on the lower portion of the handlebar, the handlebar is first abnormally lowered, thus creating a difficult condition for him/her; as the handlebar is slowly raised, the cyclist tells the operator when, with slightly flexed arms, he/she finds no difficulty or impediment to maintain his/her position.

By a calibrated electromagnetic brake, or an equivalent device, the pedaling motion is progressively braked to increase the heart rate to the maximum sustainable effort.

Before or after this operation, the seat is allowed free horizontal displacement and, as the cyclist pedals at his/her highest sustainable heart rate, the forward or backward seat position is found that generates the dynamic balance of the subject on the bicycle.

The balance position is found by actuating the rear seat dynamometer and the front handlebar dynamometer, by adjusting the inclination of the seat post, which will drive the handlebar along without changing neither the distance thereof from the seat, nor the seat-handlebar height difference.

This movement also displaces the center of gravity of the cyclist relative to the pedal pushing point (which corresponds to the point of the pedal rotation path in which the direction of the force exerted thereon is orthogonal to the pedal crank) and causes loads to be transferred from the seat to the handlebar and vice versa.

Since the seat post moves during the pedaling motion, and the pedaling effort is intense as it occurs at the maximum sustainable heart rate of the subject, the balance of horizontal components by using the two dynamometers (i.e. by reaching the same value on both instruments), so that said components have the same modulus, the same direction but opposite senses, allows to also account for any horizontal components introduced in the pedaling motion of the subject under examination.

The result is that the cyclist will be in his/her own optimal pedaling effort condition, well balanced and motionless on the seat, and will not be forced to waste energy to use muscles for contrasting an unbalanced position or to leave the previously determined highest efficiency position.

The above may be also implemented with several degrees of bicycle inclination, in such a manner as to simulate an uphill path. An hydraulic system allows to change the inclination of the bicycle support surface.

The inclined surface system allows to determine, by using the same method, the position of the cyclist in an uphill inclination position, thereby allowing to optimally dimension the frame and to determine the best on-seat position even in this important riding condition.

The characteristics of the invention and the advantages derived therefrom will appear more clearly from the following description whereof a non-limiting embodiment is shown in detail in the annexed drawings.
Fig. 1 is a block diagram, showing the general operation of the apparatus.

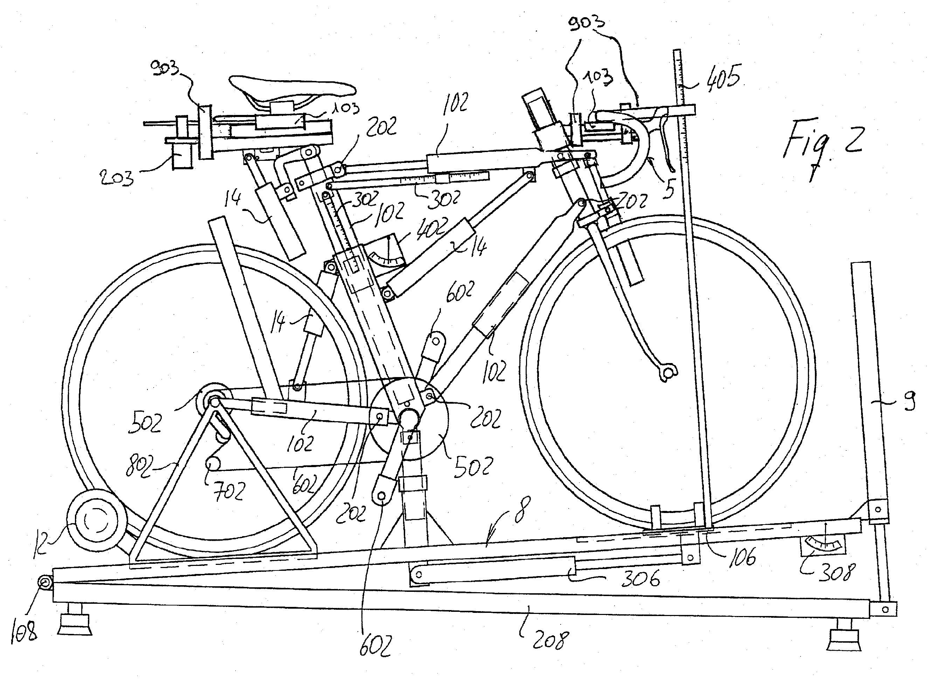

Fig. 2 is a general side view of the device.

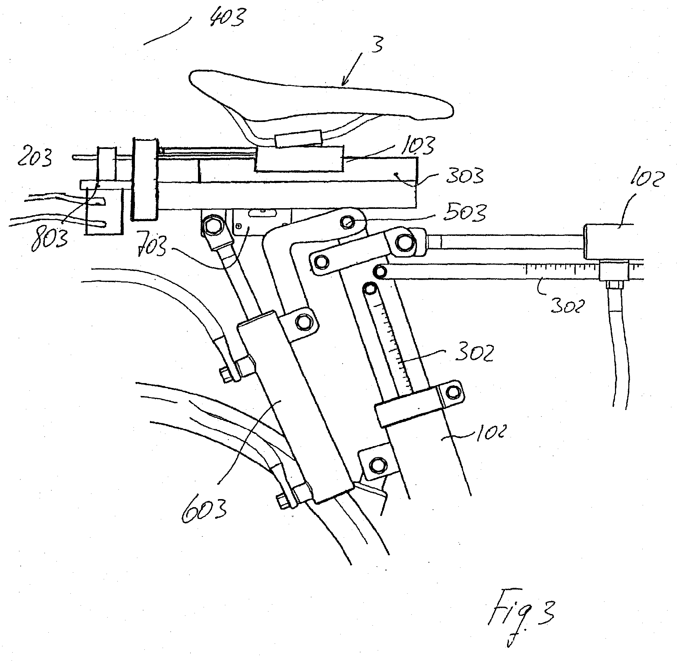

Fig. 3 shows the guide system for the seat post slide, including the slide lock and stroke-restricting system.

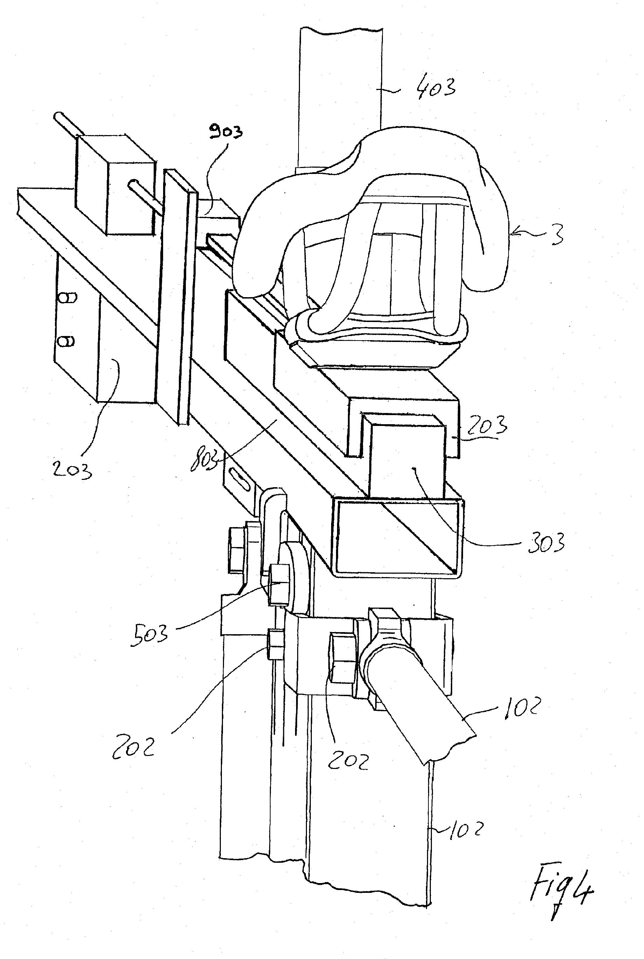

Fig. 4 is a perspective view of the guide system for the seat post guide, including the dynamometer and the seat locking system.

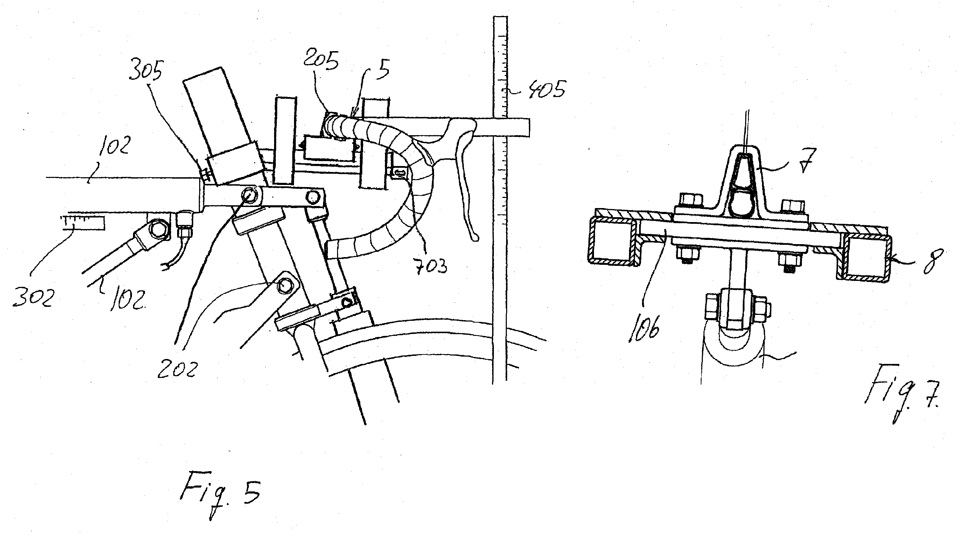

Fig. 5 shows the slide-mounted handlebar, the dynamometric stroke-restricting system and the handlebar height detection system.

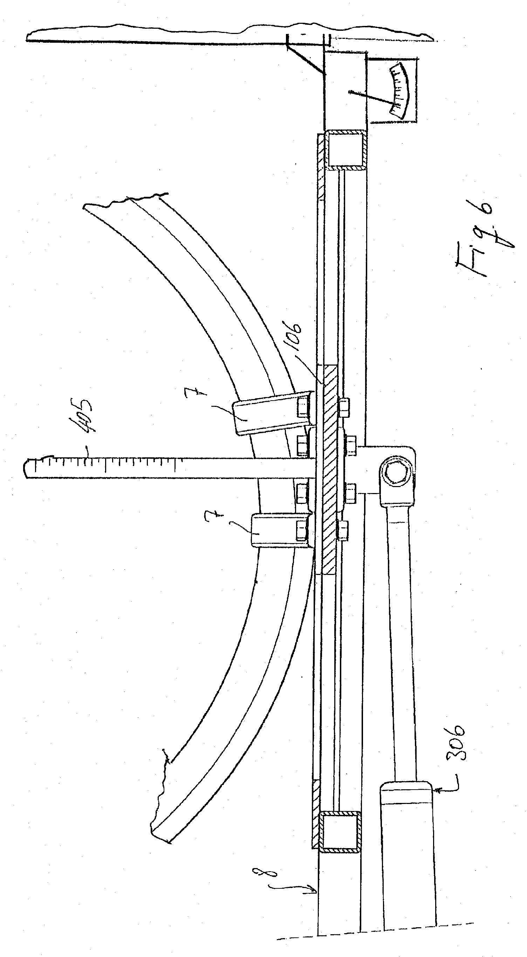

Fig. 6 is a side sectional view of the bicycle frame supporting platform, which also shows the slide for adjusting the handlebar post inclination, the linear double-acting actuator, which allows the platform to be raised, and the inclination detection system.
Fig. 7 is a front sectional view of the slide for adjusting the handlebar post inclination, and the linear double acting actuator which allows motion thereof.

The device is formed by a traditionally shaped frame 2 having telescopic tubular members 102, or equivalents, which are joined together by a system of hinges 202, providing all degrees of freedom to the system.

The telescopic tubular members 102 may be displaced angularly and/or their length may be adjusted by linear double-acting oleo-pneumatic or pneumatic actuators 14 to ensure rectilinear or angular movements in both directions.

Alternatively, the telescopic tubular members 102, or at least one or a few of them may themselves consist of a linear actuator.

Some of the telescopic members, e.g. the seat post and the upper horizontal tube, may be formed by an actuator cylinder or contain an actuator cylinder therein.

Each tubular member of the frame is graduated, so that its length may be readily read, and a special instrument 402 is fitted on the tube that forms the seat post, which allows direct reading of its inclination.

The traditional front transmission system is formed by the crank axle which is fitted with two toothed wheels 502 having different numbers of teeth and two length-adjustable connecting rods, connected with quick-release pedals. A traditional chain 602 transmits motion to the rear toothed wheels fitted on the wheel axle.

The velocity ratio change is provided through front and rear derailleurs 702, also of the traditional type.

The traditional rear wheel 4 is hung on two special triangular supports 802, which allow free rotation thereof; the triangular support is in turn mounted on a movable platform 8. The rear wheel rim is filled with lead to increase mechanical inertia.

On the other hand, the front wheel 4' is mounted, by means of appropriately shaped collars or half-collars 7, to the platform 8, through a slide 106 that allows the wheel to move along a straight line corresponding to the intersection between the planes that contain the platform and the frame; such movement is allowed by a linear double-acting oleo-dynamic actuator 306. This movement allows to change the handlebar post inclination.

The handlebar 5 is mounted on a slide 103 that allows it to move along the plane that contains the frame and perpendicular to the crank axle; the slide 103 moves freely so as to forwardly and backwardly abut, during its motion, against force meters 903, is adjustable in height by a double-acting oleo-dynamic actuator, and has a graduated rod 405 for height measurement. The guide along which the handlebar slide 103 is displaced is equipped with a level 703, which is designed to maintain the horizontal position.

The seat 3 is mounted on a slide 103, which allows it to move along the plane that contains the frame and perpendicular to the crank axle; the seat 3 is allowed to move by lowering a clamp screw 203 controlled by a double-acting pneumatic actuator 403 whose function is to lock by friction the slide 103 in an engaged position, through a slideable rod connected thereto, whereas it allows it to move freely in the disengagement position.

The slide 203 whereon the seat 3 is mounted slides on a guide 303, which is connected to the post by a hinge 503; the angle of inclination of the seat and the height thereof relative to the platform may be changed by linear double-acting oleo-pneumatic actuators 603.

A level 703 provides the horizontal position of the guide on which the seat lies, both to fit the different inclinations of the seat post, and to specifically set the seat position for plain or uphill paths.

The platform 8 that supports the bicycle is in turn connected by a hinge 108 to a base 208, which rests on the floor; a linear double-acting oleo-pneumatic actuator 9, located on the side opposite to the hinge 108 is provided to change the inclination of the two platforms 8, 208, thereby simulating the various slopes of an uphill path.

A manual or automatic meter 308 with a grade scale detects the inclination of the platform 8 which supports the frame.

An electromagnetic brake 12 or a device having a similar effect is placed in contact with the rear wheel to generate the possible load conditions.

Meters (to measure the revolutions, the power delivered, etc.) may be fitted to the brake 12, and interfaced with a computer 11 which, from the data provided by a heart rate meter 13, a dynamometric device 903 connected to direct sensors 15 in turn connected to the computer, and the device 8 for detecting the position of the cyclist's limbs, can determine, by using some suitable software, the parameters to be used for building a frame or optimizing an existing frame.

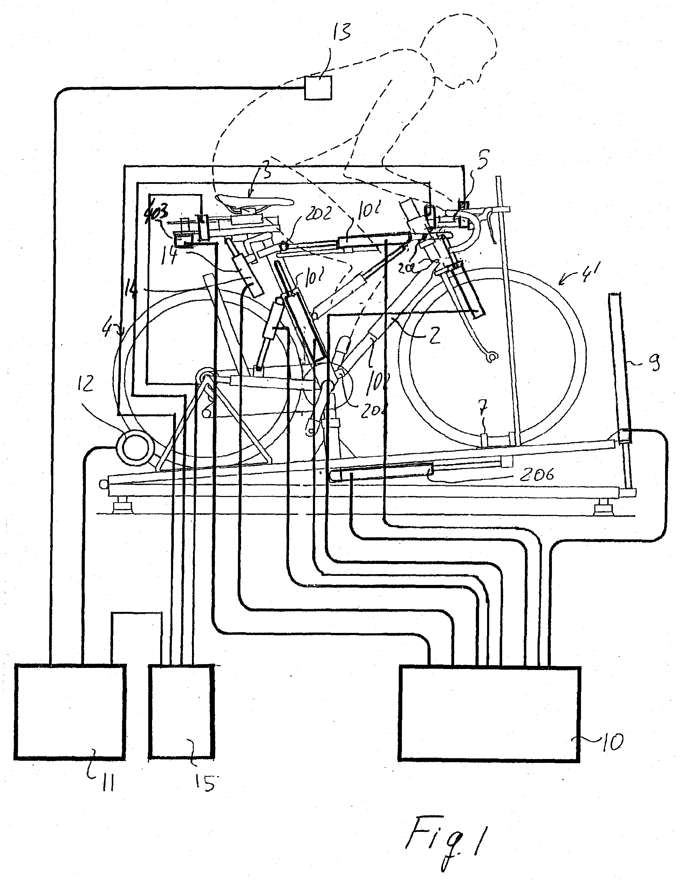

The linear double-acting actuators placed on the frame and the inclinable platform are controlled by a central unit 10, as shown in Fig. 1, which is equipped with suitable pressure maintaining pumps; a valve system, or equivalent, is used to adjust the position of linear actuators. The introduction of sensors, fitted on the linear double-acting actuators of the frame and the inclinable platform, and of solenoids, disposed inside the central unit, allows to integrate the whole process in the computer, by using appropriate interfaces and software.

Hence, a processing and control unit 11 might handle both the central unit 10 for controlling the actuators and the signals from the frame member length sensors and from the devices for measuring the angular positions and the inclinations and the signals from the dynamometers.

Further, the processing unit 11 may also control (as shown in Fig. 1), the continuous adjustment of the electromagnetic brake or the like, which defines the resistance of the wheel to the pedaling motion, hence the work or torque to be exerted by the athlete. In this case, the central unit controls and regulates the resistance to be set at the rear wheel by the electromagnetic brake, based on the signals of a heart rate meter or another instrument adapted to monitor the quality and effort amount indicators, as well as the type of exercise (aerobic or anaerobic), that the athlete is performing.

The invention intends to achieve the above objects by providing a method as described below:

If the cyclist has performed the Conconi threshold test, the maximum sustainable rate will be considered as about 80% of the aerobic threshold rate, and if the cyclist has not performed a test, he/she may simply provide his/her maximum sustainable rate in an effort condition, as detected by a normal heart rate meter, before the relevant test.

The device is set by input of the frame dimensions and the seat and handlebar positions, as obtained by the coefficient method and or by input of the dimensions of the existing frame.

Then, a pre-warm up phase is initiated, during which the seat height and the handlebar position are adjusted by using the leg angle detection method, as described above; the handlebar height is particularly determined on the basis of the ability of the subject to get close to the optimized position of the torso, which is found by interaction with the cyclist.

Thanks to the braking device, effort is progressively increased until the maximum sustainable effort is reached. The seat is released, and the front handlebar dynamometer and the rear seat dynamometer are used to detect the horizontal components of the forces exerted on the handlebar and the seat respectively.

Then, while still monitoring that the work conditions are within the defined range, the seat post inclination is adjusted until similar seat and handlebar load indications are reached on the rear seat dynamometer and the front handlebar dynamometer respectively.

At the end of the frame set-up session, the dimensional and geometric parameters will be read manually or automatically and the final seat and handlebar position will be detected.

These parameters will be used to manually or automatically prepare the frame design or to apply the seat and handlebar positions to the existing bicycle.

Particularly, if parameters are detected automatically, sensors will be appropriately interfaced with a computer which, by using special software, will process the detected data and provide the frame design or the characteristic measurements of the athlete on the bicycle.

## Claims

1. A device comprising a frame having articulated and/or extendable members, for association to a seat, a handlebar and a crank set, **characterized in that** the support frame consists of a bicycle frame, which has all or at least some of its members jointed together in an angularly displaceable and/or in an extendable and retractable manner, and in such a manner as to allow them to be locked in the position and/or angle that is selected or obtained by tests performed by the device.

2. A device as claimed in claim 1, **characterized in that** the seat slides within the plane that contains the frame, and perpendicular to the crank axle.

3. A device as claimed in claim 1 or 2, **characterized in that** the handlebar slides within the plane that contains the frame, and perpendicular to the crank axle.

4. A device as claimed in one or more of the preceding claims 27 to 32, **characterized in that** the seat may be inclined.

5. A device as claimed in one or more of the preceding claims, **characterized in that** the seat may be adjusted in height.

6. A device as claimed in one or more of the preceding claims, **characterized in that** it comprises means (402) for measuring the relative and/or absolute angles of at least one or some or all of the frame members (102).

7. A device as claimed in one or more of the preceding claims, **characterized in that** it comprises means (302) for measuring the length of at least one or some or all of the frame members.

8. A device as claimed in one or more of the preceding claims, **characterized in that** it comprises seat position measuring (703) and/or handlebar position measuring means (405).

9. A device as claimed in one or more of the preceding claims, **characterized in that** it comprises means for measuring the horizontal components of the forces exerted on the seat and the handlebar.

10. A device as claimed in one or more of the preceding claims, **characterized in that** it comprises means for measuring the seat and/or handlebar angles relative to one or more or all of the frame members.

11. A device as claimed in one or more of the preceding claims, **characterized in that** it has actuators (14, 102) allowing angular displacement and/or extension and retraction, which consist of double-acting pneumatic or oleo-pneumatic cylinders or the like.

12. A device as claimed in one or more of the preceding claims, **characterized in that** it has actuators (14, 102) allowing angular displacement and/or extension and retraction, which consist of worm and/or gear systems or the like.

13. A device as claimed in one or more of the preceding claims, **characterized in that** the bicycle frame has traditional forks and is mounted on traditional wheels, the rear wheel being locked on a slide (106); the rear fork is mounted on a support (802) which allows the rear wheel to rotate freely.

14. A device as claimed in one or more of the preceding claims, **characterized in that** it has a chain drive (602) with one or more front and/or rear toothed wheels (502) to be selected by traditional derailleurs (702) or the like.

15. A device as claimed in one or more of the preceding claims, **characterized in that**:
• means are provided for setting the physical effort to be exerted on the pedals
• means are provided for measuring the actually developed effort and/or work and/or power
• means are provided for measuring the heart rate and/or the main bicycling-relevant physiological functions
• means are provided for measuring the intensity of the components of the forces exerted on the seat and the handlebar
• means are provided for storing and/or processing the data collected by the measuring means.

16. A device as claimed in one or more of the preceding claims, **characterized in that** the effort setting means is a brake (12), particularly of the electromagnetic type, which operates by electromagnetic induction.

17. A device as claimed in one or more of the preceding claims, **characterized in that** the means for measuring the actually developed physical effort and/or work and/or power are means for detecting the number of revolutions of the rear wheel and/or the pedals and/or the electromagnetic phenomena occurring in the brake.

18. A device as claimed in one or more of the preceding claims, **characterized in that** it the means for measuring the horizontal forces exerted on the seat and the handlebar are electronic dynamometers or the like.

19. A device as claimed in one or more of the preceding claims, **characterized in that** the heart rate measuring means are heart rate meters (13).

20. A device as claimed in one or more of the preceding claims, **characterized in that** the means for processing the collected data are computers (11).

21. A device as claimed in one or more of the preceding claims, **characterized in that** the bicycle frame is mounted on a platform (8) whose inclination may be adjusted (to simulate an uphill path) by a cylindrical linear double-acting oleo-pneumatic actuator or the like.

22. A device as claimed in one or more of the preceding claims, **characterized in that** means are provided for measuring the inclination of the platform relative to the ground.

23. A device as claimed in one or more of the preceding claims, **characterized in that** automatic means (sensors) are provided for detecting the (relative and/or absolute) positions and/or lengths and/or (relative and/or absolute) angles and/or inclinations of one or more or all of the members that form the device.

24. A device as claimed in claim 23, **characterized in that** said automatic sensor means are connected to a computer for reading and/or storage and/or interpretation and/or processing thereof.

25. A device as claimed in claim 24, **characterized in that** software operates in the computer for measuring the basic athlete posture angles and for automatically generating the athlete image, which includes the traces of the angle lines, with the corresponding measures and for automatically generating the construction design of the frame, based on the collected data.

26. A device as claimed in one or more of the preceding claims, **characterized in that** the effort to be applied by using the braking means is set by measuring the physiological parameters of the cyclist.

27. A method for determining customized bicycle frames, **characterized in that** it has a bicycle frame having extendable and/or retractable, and freely mutually orientable members;
an element for transmitting pedal driving motion to a bicycle wheel, whose rotation resistance is adjustable;
means for determining the threshold below which the physical exercise remains within aerobic parameters;
means for monitoring the level of said physiological parameters during exercise and means for comparing said measured values with theoretical and/or preset values;
the frame members being modified in terms of length and/or mutual inclination until a physical exercise condition is obtained that is deemed to be optimal in relation to the characteristic angles of the limbs or body parts of the athlete, and to his/her dynamometric balance during the exercise relative to typical physiological parameters being considered for him/her.

28. A method as claimed in claim 27, **characterized in that** heart rate is constantly detected during the test.

29. A method as claimed in claim 27, **characterized in that** the rearward motion of the seat relative to the pedal axle (with the crank axle in a horizontal position) or the orthogonal projection of any point of the seat or the seat post on the horizontal line drawn for the crank axle as well as the relevant distance therefrom are determined by providing a dynamic balance of the horizontal forces discharged by the cyclist on the seat and handlebar (during the pedaling effort) in the direction of the line defined by the intersection between the plane that contains the frame and the horizontal planes that contain the seat and handlebar guides respectively.

30. A method as claimed in one or more of the preceding claims 27 to 29, **characterized in that** the dynamic balance of the horizontal forces exerted on the seat and the handlebar is determined by direct measurement of the horizontal components of said forces and/or by indirect measurement, i.e. direct measurement of the force vector modulus and the angle of projection on the horizontal component and determination of the horizontal component, by calculating said projection or by determining the vertical component and the angle formed by said vertical component and the force vector.

31. A method as claimed in one or more of the preceding claims, **characterized in that** a tolerance is provided for the horizontal component balancing condition, so that a condition is deemed to be a balance condition even when it is close to the exact balance condition.

32. A method as claimed in one or more of the preceding claims, **characterized in that** it includes a step in which the frame and/or bicycle geometry, as well as the seat and handlebar positions in the balance condition are checked for correspondence with the frame and/or bicycle geometry and the seat and handlebar positions identified in the highest comfort conditions by the cyclist, said frame geometry and said seat and handlebar positions being defined as optimal for the bicycle and/or the frame if they are close to the conditions determined by a horizontal force balancing conditions, within a predetermined difference range.
